# EUROPÄISCHE PATENTANMELDUNG

(11) **EP 0 711 618 A1**
(43) Veröffentlichungstag der Anmeldung: **15.05.1996**
(21) Anmeldenummer: 94117685.1
(22) Anmeldetag: 09.11.1994
(51) Int. Cl.: B23C 3/02, B23B 5/32

(54) **Verfahren zur spanenden Bearbeitung eines Radsatzes und Einrichtung zur Durchführen des Verfahrens**

(71) Anmelder: HEGENSCHEIDT-MFD GmbH, D-41812 Erkelenz (DE)
(72) Erfinder: Heimann, Alfred Dr. Ing., D 52078 Aachen (DE)
(74) Vertreter: Aubele, Karl B.

(57) **Zusammenfassung**

Bei der Erfindung geht es um ein Verfahren zur spanenden Bearbeitung eines Radsatzes (1) mittels mindestens eines profilgerecht arbeitenden Werkzeuges (2), wobei der Radsatz (1) von Führungsrollen (3), gestützt und/oder angetrieben wird sowie um eine Einrichtung zur Durchführung des Verfahrens. Um die bei der Radsatzbearbeitung geforderte hohe Rundlaufgenauigkeit ohne eine mechanische Verbindung des Werkzeugs mit der Drehachse des Radsatzes zu ermöglichen und um so auf rüstzeitintensive und bauaufwendige Spann-oder Zentiereinrichtungen verzichten zu können, wird vorgeschlagen, daß während des Bearbeitungsvorganges durch etwaige Exzentrizitäten hervorgerufene radiale Lageänderungen des Drehmittelpunktes (4) mindestens jedes in Bearbeitung befindlichen Rades des Radsatzes mittels mindestens einer Sensoreinrichtung (7) erfaßt werden, Signale der Sensoreinrichtung an mindestens eine Steuereinrichtung (9) weitergeleitet werden und mindestens zwei der mindestens jedem in Bearbeitung befindlichen Rad (5) zugeordneten Führungsrollen (3), welche jeweils mit mindestens einer zur Drehachse (6) des Radsatzes (1) radial gerichteten Komponente beweglich und mittels mindestens einer Verstelleinrichtung (8) verstellbar sind, mittels der von einer Steuereinheit (9) entsprechend den erfaßten Lageänderungen des Drehmittelpunktes (4) des jeweils zugeordneten Rades (5) gesteuerten Verstelleinrichtungen (8) derart verstellt werden, daß der Drehmittelpunkt (4) mindestens jedes in Bearbeitung befindlichen Rades (5) ständig in einer raumfesten Lage gehalten wird.

## Beschreibung

Die Erfindung betrifft ein Verfahren zur spanenden Bearbeitung eines Radsatzes mittels mindestens eines profilgerecht arbeitenden Werkzeuges, wobei der Radsatz von Führungsrollen, gestützt und/oder angetrieben wird sowie eine Einrichtung zur Durchführung des Verfahrens.

Verfahren der eingangs beschriebenen Art sind bekannt und werden zur Profilierung und Reprofilierung der Radsätze von Eisenbahnfahrzeugen, z. B. in Form einer Dreh- oder Fräsbearbeitung, häufig eingesetzt. Der Vorteil dieser sog. Unterflurbearbeitungsverfahren ist in der Tatsache zu sehen, daß eine Bearbeitung der Radsätze im eingebauten Zustand erfolgen kann, auf eine zeitaufwendige Demontage und spätere Montage der Radsätze also verzichtet werden kann. Bei der spanenden Unterflurbearbeitung von Radsätzen gemäß den Verfahren des StdT. stellt die Erzielung der hohen geforderten Rundlaufgenauigkeit bei gleichzeitiger Gewährleistung einer ausreichenden Stabilität des Bearbeitungsprozesses jedoch einen Problembereich dar. Derzeit kommen im wesentlichen drei Prinzipien bei der Unterflurradsatzbearbeitung zur Anwendung:
Zum einen besteht die Möglichkeit, den Radsatz während der Unterflurbearbeitung zwischen zwei Körnerspitzen, die an den beiden Enden des Radsatzes in entsprechende Körnerbohrungen eingesetzt werden, zu zentrieren.

Diese Körnerspitzenzentrierung weist zwar eine relativ einfache und vom fahrzeugtyp unabhängige Bauart auf, macht jedoch die Demontage der Radlagergehäusedeckel unabdingbar. Dabei werden die Wälzlager des Radsatzes einem erheblichen Verschmutzungsrisiko ausgesetzt. Zusätzlich zu diesem Risiko der Beeinträchtigung der Lebensdauer der Lager sind bei der Körnerspitzenzentrierung umfangreiche Rüstarbeiten notwendig und der Bauaufwand für eine Zentriereinrichtung ist erheblich. Des weiteren sind die Körnerbohrungen manchmal aufgrund von Getriebeteilen oder Abdeckungen gänzlich unzugänglich, so daß ein Einsatz dieses Verfahrens überhaupt nicht in Frage kommt.

Im zweiten Fall wird von der Möglichkeit gebrauch gemacht, bei geschlossenen Radlagergehäusen eine mechanische Verbindung derselben zum Maschinenbett, d. h. auch zum Bearbeitungswerkzeug, durch Außenlagerabstützungen und Niederhalter herzustellen. Diese Einspannmittel müssen jedoch häufig der Gehäuseform speziell angepaßt und bei der Bearbeitung unterschiedlicher Fahrzeugtypen entsprechend oft gewechselt werden, wodurch wiederum manuelle Rüstarbeiten verursacht werden. Des weiteren muß z. B. bei der Unterflurfräsbearbeitung auch die horizontale Lage der Radsätze (gesehen in Maschinenlängsrichtung) während der Bearbeitung unverändert sein. Dies ist mit den üblichen, vertikal verstellbaren Spannmitteln nur über Reibschluß möglich und technisch problematischer als in vertikaler Richtung.

Drittens sind Unterfluradsatzbearbeitungsverfahren bekannt, die nach dem Prinzip der Spurkranzzentrierung arbeiten. Bei diesem Verfahren ist keine mechanische Verbindung zwischen dem Bearbeitungswerkzeug und der Radsatzachse vorhanden, so daß keine zeitaufwendige Rüst- oder Montagearbeiten erforderlich sind. Diesem Verfahren wohnt jedoch der gravierende Nachteil inne, daß die Genauigkeit der Profilierung der Radlauffläche des Radsatzes nicht besser sein kann als die Rundlaufgenauigkeit des Spurkranzes in Bezug auf die Radsatzdrehachse. Bei Spurkränzen mit durchaus üblichen größeren Exzentrizitäten kann die geforderte Rundlaufgenauigkeit der Radlauffläche nicht mehr eingehalten werden.

Mit der DE-AS 1 200 097 ist eine auf dem Prinzip der Spurkranzzentrierung basierende Unterflur-Radsatzdrehmaschine bekannt geworden, wobei der während der Bearbeitung auf festen Rollen gelagerte Radsatz mit einem profilgerecht steuerbaren Drehwerkzeug, das mit einem eine etwaige exzentrische Bewegung der Radsatzachse abtastenden Fühler verbunden ist, bearbeitet wird. Unabhängig von der Lage des Radsatzes auf den Stützrollen soll somit dafür gesorgt werden, daß der Werkzeugabstand von der Radsatzachse während eines Umlaufs stets gleich bleibt. Aus dem hierbei vorliegenden Prinzip der Werkzeugnachführung gemäß der sich ändernden Lage der Radsatzdrehachse resultiert jedoch der Nachteil, daß durch die sich bewegende Radsatzdrehachse das gesamte, über die Federn angekoppelte Fahrzeug zu Schwingungen angeregt wird. Aufgrund der sehr großen Masse von Eisenbahnfahrzeugen sind die infolge der Schwingungen auf den Radsatz einwirkenden Kräfte von erheblicher Größenordnung, so daß sich negative Auswirkungen auf die Bearbeitungsqualität ergeben.

Der Erfindung liegt somit die Aufgabe zugrunde, ein Verfahren vorzuschlagen, das eine hohe Rundlaufgenauigkeit bei der Radsatzbearbeitung ermöglicht, ohne dabei auf rüstzeitintensive und aufwendige mechanische Verbindungen zwischen dem Werkzeug und der Radsatzdrehachse, z. B. von Zentrier- oder Spanneinrichtungen, zurückgreifen zu müssen. Des weiteren soll eine Einrichtung zur Durchführung des Verfahrens vorgeschlagen werden.

Diese Aufgabe wird mit einem Verfahren gelöst, bei dem während des Bearbeitungsvorganges durch etwaige Exzentrizitäten hervorgerufene radiale Lageänderungen des Drehmittelpunktes mindestens jedes in Bearbeitung befindlichen Rades des Radsatzes mittels mindestens einer Sensoreinrichtung erfaßt werden, Signale der Sensoreinrichtung an mindestens eine Steuereinrichtung weitergeleitet werden und mindestens zwei der mindestens jedem in Bearbeitung befindlichen Rad zugeordneten Führungsrollen, welche jeweils mit mindestens einer zur Drehachse des Radsatzes radial gerichteten Komponente beweglich und mittels mindestens einer Verstelleinrichtung verstellbar sind, mittels der von einer Steuereinheit entsprechend den erfaßten Lageänderungen des Drehmittelpunktes des jeweils zugeordneten Rades gesteuerten Verstelleinrichtungen derart verstellt werden, daß der Drehmittelpunkt mindestens jedes in Bearbeitung befindlichen Rades ständig in einer raumfesten Lage gehalten wird. Somit können bei der spanenden Radsatzbearbeitung sehr hohe Rundlaufgenauigkeiten erzielt werden, da die Lage des Drehmittelpunktes mindestens jedes in Bearbeitung befindlichen und von den verstellbaren Führungsrollen gestützten Rades des Radsatzes trotz einer Abrollbewegung auf seiner möglicherweise exzentrischen Umfangsfläche stets unverändert bleibt. Dadurch, daß sich die Radsatzdrehachse zumindest an jedem in Bearbeitung befindlichen Rad ständig in derselben Lage befindet, kommt es dort zu keinerlei Kraftwirkungen zwischen Fahrzeug bzw. Federn und Radsatzachse. Negative Auswirkungen in Form elastischer Deformationen infolge der Schwingungsbeanspruchung und dadurch hervorgerufene Einbußen bei der Bearbeitungsqualität können folglich an dem in Bearbeitung befindlichen Rad bei dem erfindungsgemäßen Verfahren nicht mehr auftreten.

Vorteilhafterweise ergibt sich bei dem erfindungsgemäßen Verfahren weiter, daß die gesamte Drehachse des Radsatzes in raumfester Lage gehalten wird, wenn die Messung der Lageveränderungen durch Sensoreinheiten an beiden Rädern gleichzeitig erfolgt und sich beide Räder auf beweglich gelagerten Führungsrollen abstützen, welche entsprechend der erfaßten Lageänderungen mittels zugeordneter, mit einer Steuereinheit verbundener Verstelleinrichtungen verstellt werden. Weil die Drehachse in diesem Fall über ihre gesamte Länge raumfest ist, also auch keine Winkeländerungen infolge einer einseitigen Abstützung auf starr gelagerten Rollen eintreten können, verbleibt das gesamte Fahrzeug in einer raumfesten Position, so daß keinerlei Kraftwirkung infolge einer Schwingungsanregung des Fahrzeuges mehr vorliegt. Auch sind in diesem Fall Fehler bei der (Re-)Profilierung des Radsatzes, die durch eine sich mit den Exzentrizitäten eines starr gelagerten Rades veränderten Winkellage der Radsatzachse hervorgerufen werden, ausgeschlossen. Eine gleichzeitige Bearbeitung beider Räder ist somit in sehr vorteilhafter Weise möglich, wodurch der Zeitaufwand für die Bearbeitung deutlich reduziert wird.

Im Hinblick auf eine Einrichtung zur Durchführung des erfindunsgemäßen Verfahrens ist die Aufgabe dadurch gelöst, daß eine Einrichtung vorgeschlagen wird, die durch mindestens eine mindestens an jedem in Bearbeitung befindlichen Rad angeordnete Sensoreinrichtung zur Erfassung der durch etwaige Exzentrizitäten hervorgerufenen radialen Lageänderungen des Drehmittelpunktes des zugeordneten Rades, mindestens eine Steuereinheit, die über mindestens eine Steuerleitung mit jeder Sensoreinrichtung verbunden ist, jeweils mindestens zwei mindestens jedes in Bearbeitung befindliche Rad abstützende, mit mindestens einer zur Drehachse des Radsatzes radial gerichteten Komponente beweglichen Führungsrollen, welche mittels Verstelleinrichtungen verstellbar sind, wobei der Drehmittelpunkt mindestens jedes in Bearbeitung befindlichen Rades des sich drehenden Radsatzes durch eine entsprechend den erfaßten Lageänderungen gesteuerte Verstellung der zugeordneten Führungsrollen ständig in einer raumfesten Lage haltbar ist, gekennzeichnet ist. Es werden somit an sich bekannte Baugruppen in gegenüber dem StdT. neuer Kombination verwendet, wodurch sich mit überraschend einfachen Mitteln eine sehr hohe Rundlaufgenauigkeit der bearbeiteten Radsätze erzwingen läßt, ohne dazu auf irgendwie geartete mechanische Spann- oder Zentriermittel zurückgreifen zu müssen.

Gemäß einer Ausgestaltung der erfindungsgemäßen Einrichtung wird vorgeschlagen, daß ein fahrzeugfester Teil der Sensoreinrichtung am Radlagergehäuse und/oder am Lagerdeckel befestigt ist. Weil das Radlagergehäuse sowie dessen Lagerdeckel eine feste Lage in Bezug auf den Drehmittelpunkt des jeweiligen Rades besitzen, ist eine direkte Anbringung des fahrzeugfesten Teils der Sensoreinrichtung an der sich drehenden Radsatzachse nicht erforderlich. Zur Vermeidung möglicher Meßungenauigkeiten und etwaiger Winkeländerungen der Drehachse sollte der Sensor jedoch in der Nähe der Drehmitte befestigt werden.

Nach weiteren Ausgestaltungsvarianten der erfindungsgemäßen Einrichtung wird vorgeschlagen, daß die Sensoreinrichtung eine Laserdiode als Sender und eine 4-Quadrantendiode als Empfänger oder berührungslose Weggeber nach dem Wirbelstromprinzip oder berührende induktive, kapazitive oder potentiometrische Weggeber zur Messung von Punkten des Radlagergehäuses aufweist. Es ist ebenfalls möglich, daß bei der Sensoreinrichtung die Beobachtung einer Zielmarkierung auf dem Radlagergehäuse und/oder Lagerdeckel mittels einer CCD-Kamera erfolgt, oder daß bei der Sensoreinrichtung die Messung von Abstandsänderungen von Punkten des Radlagergehäuses und/oder Lagerdeckels mit einem Triangulationstaster erfolgt. Bei all diesen Möglichkeiten der Ausgestaltung der Beobachtungssensorik handelt es sich um Lösungen, die die für die Radsatzbearbeitung erforderliche Meßgenauigkeit und Meßgeschwindigkeit aufweisen und sich vorteilhafterweise in Regelkreise integrieren lassen.

Gemäß zwei weiteren Ausgestaltungen ist vorgesehen, daß die Führungsrollen im Maschinenbett verschiebbar gelagert oder um eine im Maschinenbett gelagerte Achse schwenkbar sind. Auf diese Weise wird eine präzise und schnell durchführbare Verstellung der Führungsrollen gewährleistet.

Die Erfindung weiter ausgestaltend wird vorgeschlagen, daß bei mindestens einer der nicht angetriebenen Führungsrollen mindestens eine Einrichtung zur Umfangsmessung eines in Bearbeitung befindlichen Rades vorgesehen ist. Vorteilhafterweise wird hierdurch erreicht, daß während der Bearbeitung mit einfachen Mitteln eine zuverlässige Umfangs-, d.h. auch Durchmessermessung eines Rades durchgeführt werden kann, da zwischen einem Rad und einer nicht angetriebenen Führungsrolle kein nennenswerter Schlupf auftritt.

Es ist auch möglich, daß an jedem Rad mindestens eine der Führungsrollen das zugeordnete Rad an der Spurkranzkuppe abstützt und mittels eines Anlaufbundes das Rad an der Innenseite der Spurkranzkuppe in axiale Richtung führt. Somit kann eine sichere axiale Führung des Radsatzes während des gesamten Bearbeitungsvorgangs erreicht werden, da der Anlaufbund auf der Innenseite des Radsatzes bis in Bereiche des Spurkranzes hineinreicht, die nicht bearbeitet werden.

Nach einer anderen Ausgestaltungsvariante der erfindungsgemäßen Einrichtung wird vorgeschlagen, daß der Anlaufbund das gleiche Profil wie die Innenseite der Spurkranzkuppe aufweist. Dies ermöglicht eine sehr sichere und spielfreie Führung des Spurkranzrückens, der erfahrungsgemäß nur einem geringem Betriebsverschleiß unterworfen ist und daher stets seine Ursprungsform weitestgehend beibehält.

Schließlich ist es gemäß zweier Ausgestaltungen noch möglich, daß als Verstelleinrichtungen CNC-gesteuerte Servomotoren oder Fluidzylinder vorgesehen sind. Derartige Verstelleinrichtungen sind robust und ermöglichen die Verstellung der Führungsrollen mit der notwendige Genauigkeit und Geschwindigkeit.

Nachfolgend soll die Erfindung anhand der beigefügten Zeichnungen näher erläutert werden.

Es zeigen:
- Figur 1: ein schematische Darstellung einer Vorderansicht eines Ausführungsbeispiels der erfindungsgemäßen Einrichtung mit zwei Fluidzylindern als Verstelleinrichtungen
- Figur 2: eine Seitenansicht des Ausführungsbeispiels aus Fig. 1 (ohne Darstellung des Werkzeugs)
- Figur 3: eine schematische Darstellung einer um eine im Maschinenbett gelagerte Achse schwenkbaren Führungsrolle und
- Figur 4: eine schematische Darstellung einer an einem Rad anliegenden Führungsrolle mit einem Anlaufbund, dessen Profil der Innenseite des Spurkranzes angepaßt ist.

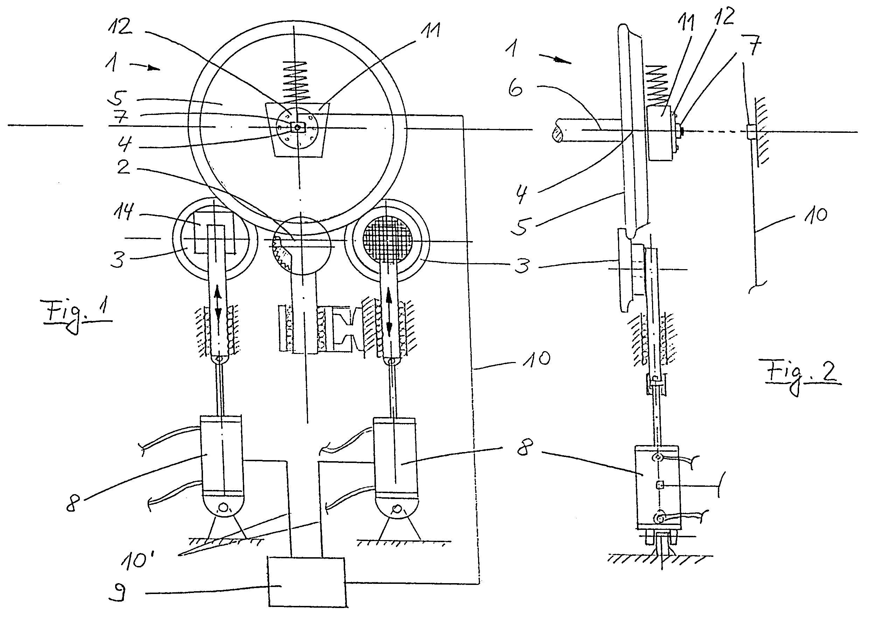

Aus Fig. 1 ist zu entnehmen, daß ein Rad 5 eines Radsatzes 1 auf zwei Führungsrollen 3 abgestützt ist, von denen mindestens eine mittels einer nicht abgebildeten, aber bekannten Einrichtung drehantreibbar ist. Das Werkzeug 2, in diesem Fall z. B. ein Fräser, ist mittels einer ebenfalls nicht gezeigten, aber bekannten Einrichtung profilgerecht verfahrbar und antreibbar. Der Radsatz 1 dreht sich um seine Drehachse 6, die in dem mit dem Lagerdeckel 12 verschlossenen Radlagergehäuse 11 gelagert ist. Die am Rad 5 anliegenden Führungsrollen 3 sind im Maschinenbett verschiebbar gelagert und jeweils mittels eines als Verstelleinrichtung 8 dienenden Fluidzylinders unabhängig voneinander verstellbar. Auf dem Lagerdeckel 12 ist der fahrzeugfeste Teil 7a einer Sensoreinrichtung 7 angebracht. Der andere, im Maschinenbett angeordnete Teil 7b der Sensoreinrichtung 7 ist in Fig. 2 gezeigt. Mittels der Sensoreinrichtung 7 werden durch etwaige Exzentrizitäten des Rades 5 hervorgerufene Lageänderungen des Drehmittelpunktes 4, der sich in stets derselben Lage relativ zum Radlagergehäuse 11 und Lagerdeckel 12 befindet, erfaßt und über eine Steuerleitung 10 zu einer Steuereinheit 9, die z. B. einen Rechner aufweist, geleitet. Diese berechnet aus Richtung, Größe und Geschwindigkeit der erfaßten Lageänderungen die erforderlichen Stellbewegungen der Führungsrollen 3 und steuert über Steuerleitungen 10' die Bewegung der Verstelleinrichtungen 8, hier Fluidzylinder. Der Drehmittelpunkt 4 des Rades 5 wird also ständig in einer raumfesten Lage gehalten, so daß der Abstand des Werkzeugs 2 vom Drehmittelpunkt 4 auch bei der Drehung eines exzentrisches Rades 5 immer konstant bleibt. Dadurch wird eine sehr gute Rundlaufgenauigkeit der bearbeiteten Räder 5 erzielt. Dadurch, daß der Drehmittelpunkt jedes bearbeiteten Rades in Bezug auf das Maschinenbett stets raumfest gehalten wird, erfolgt keinerlei Schwingungsanregung des Fahrzeugs über die zwischen dem zugeordneten Radlagergehäuse und dem Fahrzeugaufbau befindlichen Federn, so daß eine extrem vibrationsarme und sehr genaue Bearbeitung erfolgt.

Aus Figur 2 ist in einer schematischen Darstellung zu erkennen, wie sich beispielsweise ein fahrzeugfester Teil /a der Sensoreinrichtung 7 am Lagerdeckel 12 des Radlagergehäuses 11 befindet und mit einem gestellfesten Teil 7b der Sensoreinrichtung 7, das fest im Maschinenbett gelagert ist, zusammenarbeitet. Weiter ist dargestellt, wie ein Anlaufbund 16 einer der Führungsrollen 3 den Radsatz 1 an der Innenseite 17 der Spurkranzkuppe 15 in axialer Richtung führt. Eine an sich bekannte Einrichtung 14 zur Umfangsmessung des Rades 5 erlaubt dabei eine Durchmesserbestimmung während des Bearbeitungsvorgangs, da diese Einrichtung 14 an einer nicht angetriebenen und daher schlupffrei mitlaufenden Führungsrolle 3 angeordnet ist.

Wenn an dem in Fig. 2 nicht dargestellten anderen Rad 5 des Radsatzes 1 ebenfalls verstellbare Führungsrollen 3 und eine über eine weitere Steuerleitung 10 mit der Steuereinheit 9 verbundene weitere Sensoreinrichtung 7 vorhanden sind, so wird analog zu dem oben beschriebenen erfindungsgemäßen Verfahren auch der Drehmittelpunkt dieses Rades ständig in einer raumfesten Lage gehalten, so daß die gesamte Drehachse 6 sich stets in raumfester Position befindet. Durch die auf diese Weise ausgeschlossenen sonst möglichen Winkeländerungen der Drehachse 6 bei nur einem raumfest gehaltenen Drehmittelpunkt eines Rades wird eine höchste Rundlaufgenauigkeit sichergestellt sowie eine gleichzeitige Bearbeitung beider Räder 5 des Radsatzes 1 möglich.

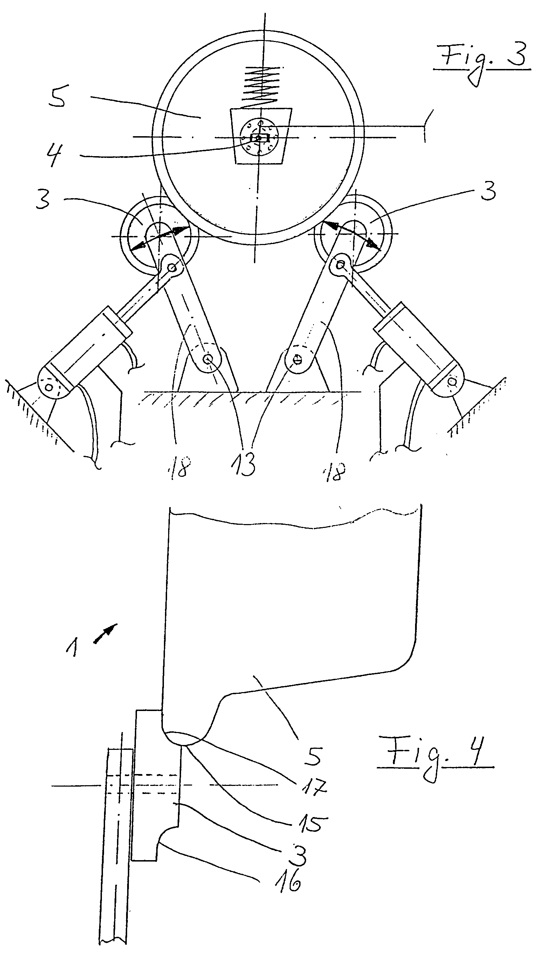

Figur 3 zeigt die schematische Darstellung einer um eine im Maschinenbett gelagerte Achse 13 schwenkbaren und an einem Arm 18 befestigten Führungsrolle 3 die mittels einer Verstelleinrichtung 8 die Lageregelung des Drehmittelpunktes 4 des abgestützten und/oder angetriebenen Rades 5 ausführt.

Figur 4 macht deutlich, wie eine einen Anlaufbund 16 aufweisende Führungsrolle 3 eine sehr genaue axiale Führung eines Rades 5 des Radsatzes 1 ermöglicht, in dem die Profile des Anlaufbundes 16 und der Innenseite 17 der Spurkranzkruppe 15 gleich ausgebildet sind.

### Liste der verwendeten Bezugszeichen

- 1: Radsatz
- 2: Werkzeug
- 3: Führungsrolle
- 4: Drehmittelpunkt
- 5: Rad
- 6: Drehachse
- 7: Sensoreinrichtung
- 7a: fahrzeugfester Teil der Sensoreinrichtung
- 7b: gestellfester Teil der Sensoreinrichtung
- 8: Verstelleinrichtung
- 9: Steuereinheit
- 10,10': Steuerleitung
- 11: Radlagergehäuse
- 12: Lagerdeckel
- 13: Achse
- 14: Einrichtung
- 15: Spurkranzkuppe
- 16: Anlaufbund
- 17: Innenseite
- 18: Arm

## Patentansprüche

1. Verfahren zur spanenden Bearbeitung eines Radsatzes (1) mittels mindestens eines profilgerecht arbeitenden Werkzeuges (2), wobei der Radsatz (1) von Führungsrollen (3), gestützt und/oder angetrieben wird, dadurch gekennzeichnet, daß während des Bearbeitungsvorganges durch etwaige Exzentrizitäten hervorgerufene radiale Lageänderungen des Drehmittelpunktes (4) mindestens jedes in Bearbeitung befindlichen Rades (5) des Radsatzes (1) mittels mindestens einer Sensoreinrichtung (7) erfaßt werden, Signale der Sensoreinrichtung (7) an mindestens eine Steuereinrichtung (9) weitergeleitet werden und mindestens zwei der mindestens jedem in Bearbeitung befindlichen Rad (5) zugeordneten Führungsrollen (3), welche jeweils mit mindestens einer zur Drehachse (6) des Radsatzes (1) radial gerichteten Komponente beweglich und mittels mindestens einer Verstelleinrichtung (8) verstellbar sind, mittels der von einer Steuereinheit (9) entsprechend den erfaßten Lageänderungen des Drehmittelpunktes (4) des jeweils zugeordneten Rades (5) gesteuerten Verstelleinrichtungen (8) derart verstellt werden, daß der Drehmittelpunkt (4) mindestens jedes in Bearbeitung befindlichen Rades (5) ständig in einer raumfesten Lage gehalten wird.

2. Einrichtung zur Durchführung des Verfahrens nach Anspruch 1, gekennzeichnet durch mindestens eine mindestens an jedem in Bearbeitung befindlichen Rad (5) angeordnete Sensoreinrichtung (7) zur Erfassung der durch etwaige Exzentrizitäten hervorgerufenen radialen Lageänderungen des Drehmittelpunktes (4) des zugeordneten Rades (5), mindestens eine Steuereinheit (9), die über mindestens eine Steuerleitung (10) mit jeder Sensoreinrichtung (7) verbunden ist, jeweils mindestens zwei mindestens jedes in Bearbeitung befindliche Rad (5) abstützende, mit mindestens einer zur Drehachse (6) des Radsatzes (1) radial gerichteten Komponente beweglichen Führungsrollen (3), welche mittels Verstelleinrichtungen (8) verstellbar sind, wobei der Drehmittelpunkt (4) mindestens jedes in Bearbeitung befindlichen Rades (5) des sich drehenden Radsatzes (1) durch eine entsprechend den erfaßten Lageänderungen gesteuerte Verstellung der zugeordneten Führungsrollen (3) ständig in einer raumfesten Lage haltbar ist.

3. Einrichtung nach Anspruch 2, dadurch gekennzeichnet, daß ein fahrzeugfester Teil der Sensoreinrichtung (7) am Radlagergehäuse (11) und/oder am Lagerdeckel (12) befestigt ist.

4. Einrichtung nach einem der Ansprüche 2 oder 3, dadurch gekennzeichnet, daß die Sensoreinrichtung (7) eine Laserdiode als Sender und eine 4-Quadrantendiode als Empfänger aufweist.

5. Einrichtung nach einem der Ansprüche 2 oder 3, dadurch gekennzeichnet, daß bei der Sensoreinrichtung (7) die Beobachtung einer Zielmarkierung auf dem Radlagergehäuse (11) und/oder Lagerdeckel (12) mittels einer CCD-Kamera erfolgt.

6. Einrichtung nach einem der Ansprüche 2 oder 3, dadurch gekennzeichnet, daß bei der Sensoreinrichtung (7) die Messung von Abstandsänderungen von Punkten des Radlagergehäuses (11) und/oder Lagerdeckels (12) mit einem Triangulationstaster erfolgt.

7. Einrichtung nach einem der Ansprüche 2 oder 3, dadurch gekennzeichnet, daß die Sensoreinrichtung zur Messung von Abstandsänderungen von Punkten des Radlagergehäuses (11) und/oder Lagerdeckels (12) berührungslose Weggeber nach dem Wirbelstromprinzip aufweist.

8. Einrichtung nach einem der Ansprüche 2 oder 3, dadurch gekennzeichnet, daß die Sensoreinrichtung zur Messung von Abstandsänderungen von Punkten des Radlagergehäuses (11) und/oder Lagerdeckels (12) berührende induktive, kapazitive oder potentiometrische Weggeber aufweist.

9. Einrichtung nach einem der Ansprüche 2 bis 8, dadurch gekennzeichnet, daß die Führungsrollen (3) im Maschinenbett verschiebbar gelagert sind.

10. Einrichtung nach einem der Ansprüche 2 bis 8, dadurch gekennzeichnet, daß die Führungsrollen (3) jeweils in einer im Maschinenbett gelagerten Achse (13) schwenkbar sind.

11. Einrichtung nach einem der Ansprüche 2 bis 10, dadurch gekennzeichnet, daß bei mindestens einer der nicht angetriebenen Führungsrollen mindestens eine Einrichtung (14) zur Umfangsmessung eines in Bearbeitung befindlichen Rades (5) vorgesehen ist.

12. Einrichtung nach einem der Ansprüche 2 bis 11, dadurch gekennzeichnet, daß an jedem Rad (5) mindestens eine der Führungsrollen (3) das zugeordnete Rad (5) an der Spurkranzkuppe (15) abstützt und mittels eines Anlaufbundes (16) das Rad (5) an der Innenseite (17) der Spurkranzkuppe (15) in axiale Richtung führt.

13. Einrichtung nach Anspruch 12, dadurch gekennzeichnet, daß der Anlaufbund (16) das gleiche Profil wie die Innenseite (17) der Spurkranzkuppe (15) aufweist.

14. Einrichtung nach einem der Ansprüche 2 bis 13, dadurch gekennzeichnet, daß als Verstelleinrichtungen (8) CNC-gesteuerte Servomotoren vorgesehen sind.

15. Einrichtung nach einem der Ansprüche 2 bis 13, dadurch gekennzeichnet, daß als Verstelleinrichtungen (8) Fluidzylinder vorgesehen sind.
